# EUROPÄISCHE PATENTSCHRIFT

(11) **EP 1 275 290 B1**
(45) Veröffentlichungstag und Bekanntmachung des Hinweises auf die Patenterteilung: **26.07.2006**
(21) Anmeldenummer: 02014689.0
(22) Anmeldetag: 03.07.2002
(51) Int. Cl.: A01D 43/073

(54) **Selbstfahrende landwirtschaftliche Erntemaschine**
Automotive agricultural harvesting machine
Récolteuse agricole automotrice

(30) Priorität: 13.07.2001 DE 10134137
(43) Veröffentlichungstag der Anmeldung: 15.01.2003
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 1 151 652
- DD-A- 200 234
- US-A- 5 575 316
- US-A- 5 749 783
- US-A- 6 097 425

## Beschreibung

Die Erfindung bezieht sich auf eine selbstfahrende landwirtschaftliche Erntemaschine, insbesondere auf einen selbstfahrenden Feldhäcksler nach dem Oberbegriff des Anspruchs 1. Derartige landwirtschaftliche Erntemaschinen werden sowohl in der Grasernte als auch in der Maisernte mit unterschiedlichen Vorsatzgeräten eingesetzt. Der Antrieb erfolgt in der Regel über einen als Verbrennungsmotor ausgebildeten Antriebsmotor, dessen Betriebsdrehzahl entweder auf eine Leerlauf- oder Nenndrehzahl einstellbar ist, so daß der Antriebsmotor der selbstfahrenden landwirtschaftlichen Erntemaschine bei der Arbeit immer nur mit Nenndrehzahl betreibbar ist.

In der DD 200 234 ist eine selbstfahrende landwirtschaftliche Erntemaschine beschrieben, bei der durch eine Reduzierung der Betriebsdrehzahl des Antriebsmotors vom Arbeitsprozess zum Transport eine geregelte Anpassung an den Belastungsfall erreicht werden soll, da für die Durchführung einer Transportfahrt eine geringere Leistung als für den Arbeitsprozess benötigt wird. Dazu wird die Drehzahl des Antriebsmotors für den Transportzustand auf einen konstanten Wert unterhalb der Nenndrehzahl herabgesetzt, so daß der Antriebsmotor in einem günstigeren Bereich mit geringerem Kraftstoffverbrauch arbeitet. Die Drehzahlreduzierung soll dabei durch einen Impuls eingeleitet werden, welcher beim Einschalten der Transportgetriebestufe erzeugt wird. Den weitaus größten Teil der Betriebs- und Einsatzzeit wird die selbstfahrende landwirtschaftliche Erntemaschine jedoch während des Arbeitsbetriebes, also mit Nenndrehzahl betrieben, so daß die Kraftstoffeinsparungen beim Transport der Erntemaschine bezogen auf den Kraftstoffverbrauch während der gesamten Betriebs- und Einsatzverhältnisse nur einen Bruchteil ausmacht. Eine weit größere Bedeutung in diesem Zusammenhang kommt der Ausrüstung und dem Betrieb der selbstfahrenden landwirtschaftlichen Erntemaschine mit unterschiedlich breiten Vorsatzgeräten zu.

In der Grasernte wird die selbstfahrende landwirtschaftliche Erntemaschine mit einem Vorsatzgerät zur Aufnahme von in Schwaden gelegtem Halmgut, wie Anwelkgras und Grünfutter versehen, dessen Arbeitsbreite so ausgelegt ist, daß ein Transport der selbstfahrenden landwirtschaftlichen Erntemaschine mit dem angebauten Vorsatzgerät gerade noch zulässig ist. Das bedeutet, die Breite des Vorsatzgerätes entspricht auch in etwa der zulässigen Transportbreite der selbstfahrenden landwirtschaftlichen Erntemaschine auf öffentlichen Straßen. Um auch in der Maisernte eine akzeptable Flächenleistung zu erzielen, ist es notwendig, die selbstfahrende landwirtschaftliche Erntemaschine mit einem Vorsatzgerät auszurüsten, dessen Arbeitsbreite zumindest einem Vielfachen der zulässigen Transportbreite der Erntemaschine auf öffentlichen Straßen entspricht. Aus dieser Tatsache ergeben sich während des Arbeitsbetriebes unterschiedlich große seitliche Abstände zwischen der selbstfahrenden landwirtschaftlichen Erntemaschine und einem daneben fahrenden Transportfahrzeug, welches der Aufnahme und dem Abtransport des gehäckselten Erntegutes dient. Zur Gewährleistung einer verlustfreien Übergabe des Erntegutes ist dazu die als Auswurfkrümmer ausgebildete Auswurfeinrichtung zwischen einer Übernahmestelle, an der diese das Erntegut von einer Verarbeitungseinrichtung der selbstfahrenden landwirtschaftlichen Erntemaschine aufnimmt und einer Abwurfstelle des Erntegutes auf einem neben der Erntemaschine fahrenden Transportfahrzeug in Abhängigkeit von der Breite der Vorsatzgeräte in unterschiedlicher Länge ausgebildet. Praktische Einsätze haben gezeigt, daß bei selbstfahrenden landwirtschaftlichen Erntemaschinen, welche bezüglich ihrer maximal installierten Motorleistung auf den Einsatz mit einem Vorsatzgerät mit großer Arbeitsbreite (Maiserntevorsatz) und einem langen Auswurfkrümmer ausgelegt sind, in Verbindung mit einem Vorsatzgerät mit kleiner Arbeitsbreite in der Grasernte und kurzem Auswurfkrümmer die maximale, von dem Antriebsmotor bereitgestellte Antriebsenergie nicht ausnutzen können, so daß dadurch ein Teil der bereitgestellten Antriebsenergie ungenutzt bleibt und diese selbstfahrenden landwirtschaftlichen Erntemaschinen somit in der Grasernte nicht wirtschaftlich einsetzbar sind.

Aufgabe der Erfindung ist es daher, die Nachteile des Standes der Technik zu überwinden und eine selbstfahrende landwirtschaftliche Erntemaschine so zu gestalten, daß bei den unterschiedlichen Leistungsniveaus bei der Gras- und bei der Maisernte ein wirtschaftlicher Einsatz erreichbar ist.

Zur Lösung der gestellten Aufgabe zeichnet sich die selbstfahrende landwirtschaftliche Erntemaschine der vorstehend genannten Art durch die im Anspruch 1 angegebenen Merkmale aus. Hinsichtlich der weiteren Ausgestaltung der Erfindung wird auf die Ansprüche 2 bis 6 verwiesen.

Bei einer selbstfahrenden landwirtschaftlichen Erntemaschine gemäß der Erfindung ist es zur Optimierung des Verhältnisses zwischen der nutzbaren Motorleistung und dem dafür erforderlichen Kraftstoffverbrauch sowohl in der Grasernte als auch in der Maisernte vorgesehen, den Antriebsmotor der selbstfahrenden landwirtschaftlichen Erntemaschine im Arbeitsbetrieb mit einem Vorsatzgerät mit großer Arbeitsbreite und mit einem großen Abstand zwischen der Übernahmestelle und der Abwurfstelle des Auswurfkrümmers im Bereich der Nenndrehzahl zu betreiben, während im Arbeitsbetrieb mit einem Vorsatzgerät mit geringer Arbeitsbreite und mit einem geringen Abstand zwischen der Übernahmestelle und der Abwurfstelle des Auswurfkrümmers der Antriebsmotor in einem gegenüber der Nenndrehzahl reduzierten Drehzahlbereich betreibbar ist. Dadurch wird es erfindungsgemäß erreicht, daß die selbstfahrende landwirtschaftliche Erntemaschine, insbesondere ein selbstfahrender Feldhäcksler bei der Maisernte mit maximaler Leistung des Antriebsmotors betrieben werden kann, während bei der Grasernte der Antriebsmotor mit reduzierter Drehzahl in einem Betriebszustand mit verringerter Motorleistung arbeitet. Wie aus Leistungskurven von Antriebsmotoren ersichtlich ist, sinkt in diesem Bereich auch der spezifische Kraftstoffverbrauch, so daß dadurch der absolute Kraftstoffverbrauch, welcher sich aus dem spezifischen Kraftstoffverbrauch und der in diesem Betriebspunkt verbrauchten Motorleistung errechnet, deutlich gesenkt werden kann. Der Fahrer/Bediener der selbstfahrenden landwirtschaftlichen Erntemaschine kann diese also in der Grasernte ebenfalls unter optimalen wirtschaftlichen Verhältnissen einsetzen.

Gemäß einer einfachen und somit kostengünstigen Ausführungsform der Erfindung ist es vorgesehen, daß eine Steuervorrichtung zur Vorgabe der Betriebsdrehzahl des Antriebsmotors der selbstfahrenden landwirtschaftlichen Erntemaschine während des Arbeitsbetriebes aus einer Schaltvorrichtung gebildet ist, welche zur Einstellung der Drehzahl auf Leerlauf- oder Nenndrehzahl und zur Einstellung zumindest einer gegenüber der Nenndrehzahl reduzierten Drehzahl dient. Das bedeutet, der Fahrer/Bediener der selbstfahrenden landwirtschaftlichen Erntemaschine kann durch die Betätigung einer vorzugsweise elektrisch oder elektronisch ausgebildeten Schaltvorrichtung die Betriebsdrehzahl entsprechend dem verwendeten Vorsatzgerät und dem Abstand zwischen der Übernahmestelle des Erntegutes von einer Verarbeitungseinrichtung und der Abwurfstelle des Erntegutes auf dem Transportfahrzeug auswählen, so daß die Erntemaschine sowohl in der Gras- als auch in der Maisernte unter optimalen Bedingungen läuft.

Gemäß einem weiteren vorteilhaften Aspekt der Erfindung ist es vorstellbar, die Steuervorrichtung zur Vorgabe der Betriebsdrehzahl des Antriebsmotors derart auszubilden, daß die Reduzierung der Drehzahl in Abhängigkeit des Abstandes zwischen der Übernahmestelle des Erntegutes von der Verarbeitungseinrichtung in den Auswurfkrümmer und der Abwurfstelle des Erntegutes auf dem Transportfahrzeug erfolgt. Dazu können Sensormittel vorhanden sein, welche diesen Abstand erfassen und an die Steuervorrichtung weitergeben, so daß dann eine zwangsgesteuerte Reduzierung der Betriebsdrehzahl gegenüber der Nenndrehzahl erreichbar ist. Vorzugsweise kann der Bereich der reduzierten Drehzahl bei etwa 85 bis 75 % der Nenndrehzahl liegen.

Eine detaillierte Beschreibung des Gegenstandes der Erfindung erfolgt nun anhand eines Ausführungsbeispieles. In der Zeichnung stellt im einzelnen dar:
- Fig. 1: eine schematische Draufsicht auf einen Feldhäcksler mit einem ersten Vorsatzgerät und daneben fahrendem Transportfahrzeug im Arbeitsbetrieb;
- Fig.2: eine schematische Draufsicht auf einen Feldhäcksler mit einem zweiten Vorsatzgerät und daneben fahrendem Transportfahrzeug im Arbeitsbetrieb;

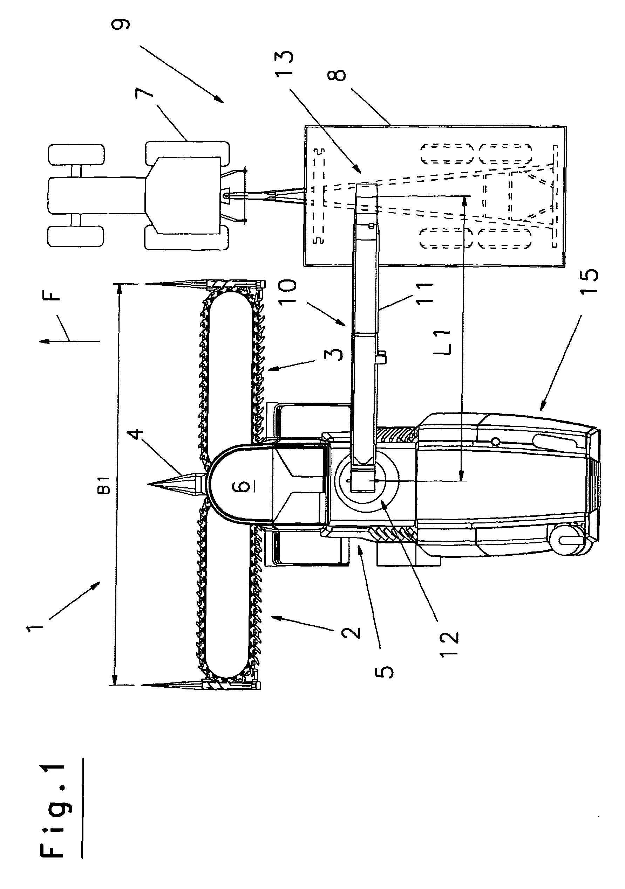

Eine erste Ausführungsform einer selbstfahrenden landwirtschaftlichen Erntemaschine, insbesondere eines Feldhäckslers mit einem Vorsatzgerät 1 zum reihenunabhängigen Ernten von auf einem Feld stehendem, stengelartigem Erntegut wie Mais oder dgl. ist in Fig. 1 näher veranschaulicht und besteht aus zumindest einer und vorzugsweise wie hier dargestellt aus zwei in der längsten Ausrichtung quer zur Fahrt- und Arbeitsrichtung F ausgerichteten Einzugsund Fördereinrichtungen 2,3, die so nebeneinander angeordnet sind, daß ein durchgehender Erntegutstreifen mit großer Arbeitsbreite abgeerntet werden kann. Zwischen den Einzugsund Fördereinrichtungen 2,3 befindet sich eine mittlere Teilerspitze 4 zur Aufteilung des abzuerntenden Erntegutstreifens mit den Einzugs- und Fördereinrichtungen 2,3. Zur Aufhängung des Vorsatzgerätes 1 an der selbstfahrenden landwirtschaftlichen Erntemaschine sind nicht dargestellte Tragemittel vorgesehen, so daß die Einzugs- und Fördereinrichtungen 2,3 aus der in Fig. 1 dargestellten Arbeits- und Betriebsstellung in eine Transportstellung überführt werden können, in der die Einzugs- und Fördereinrichtungen 2,3 eine in etwa vertikal ausgerichtete (hochgeklappte) Stellung mit einer geringen Transportbreite einnehmen. An das Vorsatzgerät 1 schließt sich eine Verarbeitungseinrichtung 5 zur Zerkleinerung von zugeführtem Erntegut an, welche unterhalb einer Fahrerkabine 6 angeordnet ist. Zur Überführung des von der Verarbeitungseinrichtung 5 zerkleinerten Erntegutes auf einen neben der Erntemaschine fahrenden und aus einer landwirtschaftlichen Zugmaschine 7 und einem Anhänger 8 bestehenden Transportfahrzeug 9 ist eine Auswurfeinrichtung 10 vorgesehen, welche als Auswurfkrümmer 11 ausgeführt ist und das Erntegut an einer Übernahmestelle 12 von der Verarbeitungseinrichtung 5 aufnimmt und es an einer Abwurfstelle 13 in den Laderaum des Anhängers 8 fördert. Bei diesem Überladevorgang ist der Auswurfkrümmer 11 in der Regel etwa quer zur Fahrt- und Arbeitsrichtung F ausgerichtet, da der Fahrer/Bediener in dieser Stellung den besten Einblick in den Laderaum zur Kontrolle und Regelung des Beladungszustandes des Anhängers 8 hat. Aufgrund der großen Arbeitsbreite B 1 des Vorsatzgerätes 1 ergibt sich auch ein großer Abstand zwischen der Erntemaschine und dem Anhänger 8, so daß zur Gewährleistung einer verlustfreien Übergabe des Erntegutes von der Erntemaschine zum Anhänger 8 ein Auswurfkrümmer 11 notwendig ist, der zwischen der Übernahmestelle 12 und der Abwurfstelle 13 einen großen Abstand L1 aufweist.

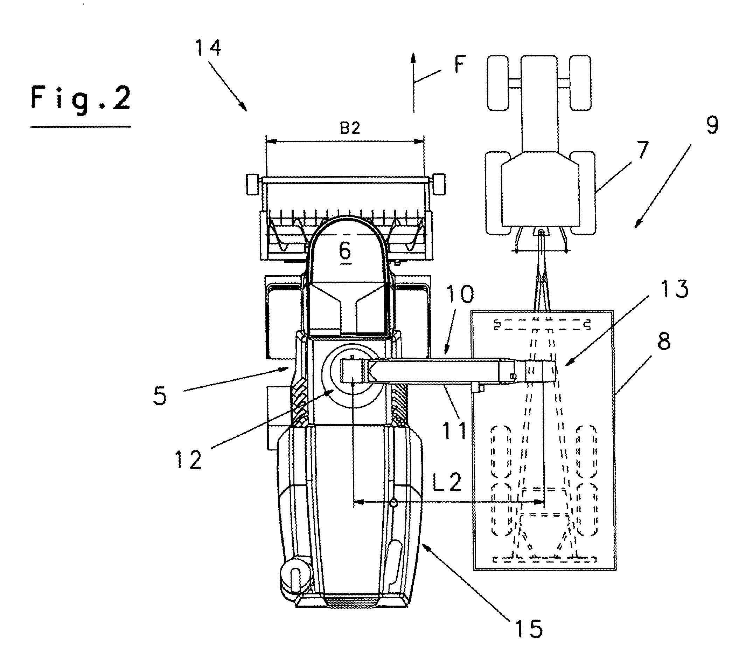

In Fig.2 ist die Erntemaschine mit einem Vorsatzgerät 14 zur Aufnahme von auf einer Feldoder Wiesenfläche liegendem und in Schwaden gelegtem Halm- und Blattgut, wie Anwelkgras und Grünfutter ausgerüstet, welches eine Arbeitsbreite B2 aufweist, die in etwa der maximal zulässigen Transportbreite auf öffentlichen Straßen entspricht. Dadurch verringert sich der seitliche Abstand zwischen der Erntemaschine und dem aus der landwirtschaftlichen Zugmaschine 7 und dem Anhänger 8 bestehenden Transportfahrzeug 9, so daß zur Durchführung eines verlustfreien Überladevorganges des Erntegutes von der Erntemaschine zum Anhänger 8 auch der Abstand L2 zwischen der Übernahmestelle 12 und der Abwurfstelle 13 kleiner wird. Die unterschiedlichen Längen des Auswurfkrümmers 11 bzw. die unterschiedlichen Abstände L1, L2 zwischen der Übernahmestelle 12 und der Abwurfstelle 13 sind dadurch erreichbar, daß im oberen, etwa horizontal verlaufenden Abschnitt des Auswurfkrümmers 11 entweder ein zusätzliches Verlängerungsrohr eingefügt oder herausgenommen wird. Es ist aber auch vorstellbar, daß der obere, etwa horizontal verlaufende Abschnitt des Auswurfkrümmers 11 ein teleskopartig verlängerbares Rohrelement enthält, so daß durch ein Zug/Druck-Stellglied eine stufenlose Veränderung des Abstandes (L1 nach L2 oder umgekehrt) zwischen der Übernahmestelle 12 und der Abwurfstelle 13 eingeleitet werden kann.

Zum Antrieb der Erntemaschine nach Fig. 1 und 2 ist ein Antriebsmotor 15 vorgesehen, welcher im hinteren Teil der Erntemaschine angeordnet ist und in einer Ausbildung der Erntemaschine nach Fig. 1 im Arbeitsbetrieb im Bereich der Nenndrehzahl, also im Bereich maximaler Motorleistung betrieben wird, während in einer Ausbildung der Erntemaschine gemäß Fig.2 der Antriebsmotor in einer gegenüber der Nenndrehzahl reduzierten Drehzahl betreibbar ist. Dadurch wird zum einen sichergestellt, daß bei großer Arbeitsbreite B 1 des Vorsatzgerätes 1 und großem Abstand L1 ein verlustfreier Überladevorgang stattfindet, bei dem es zu keinerlei Verstopfungsgefahren des Auswurfkrümmers 11 infolge einer zu geringen und von der Betriebsdrehzahl des Antriebsmotors 15 abhängigen Förderleistung der Auswurfeinrichtung 10 kommt. Andererseits wird es beim Arbeitsbetrieb der Erntemaschine mit reduzierter Betriebsdrehzahl des Antriebsmotor mit dem Vorsatzgerät 14 mit kleiner Arbeitsbreite B2 vermieden, daß infolge einer zu hohen Förderleistung der Auswurfeinrichtung 10 das Erntegut über den Anhänger 8 hinweg gefördert wird oder das Erntegut insbesondere bei halb oder höher beladenem Anhänger 8 so stark in den Laderaum des Anhängers 8 gefördert wird, daß sich die Bewegungsrichtung umkehrt und das Erntegut über die Seitenwände des Anhängers 8 zurück auf das Feld geschleudert wird. Desweiteren wird durch die Reduzierung der Betriebsdrehzahl des Antriebsmotors 15 erreicht, daß die selbstfahrende landwirtschaftliche Erntemaschine auch in der Grasernte unter optimalen wirtschaftlichen Verhältnissen einsetzbar ist.

In einer einfachen Ausführungsform der Erfindung ist es vorgesehen, daß eine Steuervorrichtung zur Vorgabe der Betriebsdrehzahl des Antriebsmotors 15 der selbstfahrenden landwirtschaftlichen Erntemaschine während des Arbeitsbetriebes aus einer Schaltvorrichtung gebildet ist, welche zur Einstellung der Drehzahl auf Leerlauf- oder Nenndrehzahl und zur Einstellung zumindest einer gegenüber der Nenndrehzahl reduzierten Drehzahl dient. Das bedeutet, der Fahrer/Bediener der selbstfahrenden landwirtschaftlichen Erntemaschine kann durch die Betätigung einer vorzugsweise elektrisch oder elektronisch ausgebildeten Schaltvorrichtung die Betriebsdrehzahl entsprechend dem verwendeten Vorsatzgerät 1 oder 14 und dem Abstand L1 oder L2 zwischen der Übernahmestelle 12 des Erntegutes von einer Verarbeitungseinrichtung 5 und der Abwurfstelle 13 des Erntegutes auf dem Transportfahrzeug 9 auswählen. Die Schaltvorrichtung könnte dazu in der Fahrerkabine 6 untergebracht sein.

Nach einer weiteren vorteilhaften Ausbildung der Erfindung ist es vorstellbar, die Steuervorrichtung zur Vorgabe der Betriebsdrehzahl des Antriebsmotors 15 derart auszubilden, daß die Reduzierung der Drehzahl in Abhängigkeit des Abstandes L1 oder L2 zwischen der Übernahmestelle 12 des Erntegutes von der Verarbeitungseinrichtung 5 in den Auswurfkrümmer 11 und der Abwurfstelle 13 des Erntegutes auf dem Transportfahrzeug 9 erfolgt. Dazu können Sensormittel vorhanden sein, welche diesen Abstand L1 oder L2 erfassen und an die Steuervorrichtung weitergeben, so daß dann eine zwangsgesteuerte Reduzierung der Betriebsdrehzahl gegenüber der Nenndrehzahl erreichbar ist.

## Patentansprüche

1. Selbstfahrende landwirtschaftliche Erntemaschine, insbesondere Feldhäcksler, welche mit einem Vorsatzgerät (1) mit einer ersten Arbeitsbreite (B1) zum Ernten von auf einem Feld stehendem Mais oder dergleichen stän gelarligern Erntegut oder mit einem Vorsatzgerät (14) mit einer zweiten Arbeitsbreite (B2) zur Aufnahme von auf einer Feld- oder Wiesenfläche liegendem Erntegut, wie Anwelkgras und Grünfutter betreibbar ist, mit einer Verarbeitungseinrichtung (5) zur Zerkleinerung und/oder Aufbereitung des Erntegutes und mit einer sich daran anschließenden, im wesentlichen aus einem Auswurfkrümmer (11) gebildeten Auswurfeinrichtung (10) zur Übernahme des Erntegutes an einer Übernahmestelle (12) von der Verarbeilungscinrichtung (5) und zur Übergabe des Erntegutes an einer Abwurfstelle (13) auf einem Transportfahrzeug (9), wobei zwischen der Übernahmestelle (12) und der Abwurfstelle (13) bei einer Verwendung des Vorsatzgerätes (1) mit der ersten Arbeitsbreite (B1) ein erster Arbtand (L1) und bei einer Verwendung des Vorsatzgerätes (14) mit der zweiten Arbeitsbreite (B2) ein zweiter Abstand (L2) vorhanden ist, sowie mit einem als Antriebsaggregat ausgebildeten Antriebsmotor (15), dessen Betriebsdrehzahl über eine Steuervorrichtung zur Einstellung der Motordrehzahl auf einen Leerlauf-, einen Nenndrehzahlwert und einen gegenüber der Nenndrehzahl reduzierten Drehzahlwert einstellbar ist, **dadurch gekennzeichnet, dass** der Antriebsmotor (15) im Arbeitsbetrieb mit dem Vorsatzgerät (1) mit der ersten Arbeitsbreite (B1) im Bereich der Nenndrehzahl betrieben wird und im Arbeitsbetrieb mit dem Vorsatzgerät (14) mit der zweiten Arbeitsbreite (B2) in einem gegenüber der Nenndrehzahl reduzierten Drehzahlbereich betreibbar ist, wobei die erste Arbeitsbreite (B1) größer als die zweite Arbeitsbreite (B2) ausgebildet ist und der erste Abstand (L1) einen größeren Betrag aufweist als der zweite Abstand (L2).

2. Selbstfahrende landwirtschaftliche Erntemaschine nach Anspruch 1, **dadurch gekennzeichnet, dass** der Antriebsmotor (15) im Arbeitsbetrieb mit dem Vorsatzgerät (14) mit der zweite Arbeitsbreite (B2) in einem gegenüber der Nenndrehzahl reduzierten Drehzahlbereich betreibbar ist, wobei die Reduzierung der Drehzahl des Antriebsmotors (15) zumindest in etwa dem Verhältnis der Abstände L2/L1 entspricht.

3. Selbstfahrende landwirtschaftliche Erntemaschine nach Anspruch 2, **dadurch gekennzeichnet, daß** die Steuervorrichtung zur Vorgabe der Betriebsdrehzahl SensorMittel umfasst, welche die Größe des Abstandes (L1 oder L2) zwischen der Übernahmestelle (12) und der Abgabestelle (13) des Auswurfkrümmers (11) erfassen.

4. Selbstfahrende landwirtschaftliche Erntemaschine nach Anspruch 3, **dadurch gekennzeichnet, daß** die Vorgabe der gegenüber der Nenndrehzahl reduzierten Drehzahl durch die Steuervorrichtung anhand der ermittelten Abstände (L1 oder L2) der Scnsonnittcl zwangsgcsteuert erfolgt.

5. Selbstfahrende landwirtschaftliche Erntemaschine nach Anspruch 1, **dadurch gekennzeichnet, daß** die Steuervorrichtung zur Vorgabe der Betriebsdrehzahl aus einer Schaltvorrichtung mit den Schaltstellungen zur Einstellung der Drehzahl auf Leerlauf- oder Nenndrehzahl und zumindest einer Zwischenstellung für die gegenüber der Nenndrehzahl reduzierten Drehzahl gebildet ist.

6. Selbstfahrende landwirtschaftliche Erntemaschine nach einem der Ansprüche 1 bis 5, **dadurch gekennzeichnet, daß** der Bereich der reduzierten Drehzahl des Antriebsmotors (15) bei vorzugsweise etwa 85 bis 75 % der Nenndrehzahl liegt.

## Claims

1. Self-propelled agricultural harvesting machine, in particular a forage harvester, which can be operated with a front attachment (1) of a first working width (B1) for harvesting maize, or the like crop for harvesting in stalk form, standing in a field, or with a front attachment (14) of a second working width (B2) for picking up crops for harvesting lying on the surface of a field or meadow, such as wilted grass or green forage, having a processing arrangement (5) for comminuting and/or conditioning the harvested crop and having an ejector arrangement (10) which follows on therefrom and which is formed in essence by an ejector elbow (11), for taking over the harvested crop from the processing arrangement (5) at a takeover point (12) and for passing over the harvested crop at an ejection point (13) on a transport vehicle (9), there being a first spacing (L1) between the takeover point (12) and the ejection point (13) when the front attachment (1) of the first working width (B1) is being used, and a second spacing (L2) when the front attachment (14) of the second working width (B2) is being used, and having a drive motor or engine (15) which forms a drive assembly and whose operating speed of revolution can be set, via a control arrangement for setting the speed of revolution of the motor or engine, to a value representing an off-load speed of revolution, a value representing a nominal speed of revolution and a value which is reduced in comparison with the nominal speed of revolution, **characterised in that** the drive motor or engine (15) can be operated in the region of the nominal speed of revolution when in working operation with the front attachment (1) of the first working width (B1) and in a speed-of-revolution range which is reduced in comparison with the nominal speed of revolution when in working operation with the front attachment (14) of the second working width (B2), the first working width (B1) being designed to be larger than the second working width (B2) and the first spacing (L1) being of a size larger than the second spacing (L2).

2. Self-propelled agricultural harvesting machine according to claim 1, **characterised in that**, when in working operation with the front attachment (14) of the second working width (B2), the drive motor or engine (15) can be operated in a speed-of-revolution range which is reduced in comparison with the nominal speed of revolution, the reduction in the speed of revolution of the drive motor or engine (15) corresponding at least approximately to the ratio between the spacings L2/L1.

3. Self-propelled agricultural harvesting machine according to claim 2, **characterised in that** the control arrangement for presetting the operating speed of revolution comprises sensor means which sense the size of the spacing (L1 or L2) between the takeover point and the delivery point (13) of the ejector elbow (11).

4. Self-propelled agricultural harvesting machine according to claim 3, **characterised in that** the presetting of the speed of revolution which is reduced in comparison with the nominal speed of revolution is performed by the control arrangement under positive control by reference to the spacings (L1 or L2) from the sensor means which are determined.

5. Self-propelled agricultural harvesting machine according to claim 1, **characterised in that** the control arrangement for presetting the operating speed of revolution is formed by a switching arrangement having switched position for setting the speed of revolution to the off-load speed of revolution or the nominal speed of revolution and at least one intermediate position for the speed of revolution which is reduced in comparison with the nominal speed of revolution.

6. Self-propelled agricultural harvesting machine according to one of claims 1 to 5, **characterised in that** the range of the reduced speed of revolution of the drive motor or engine (15) is preferably approximately 85 to 75% of the nominal speed of revolution.

## Revendications

1. Machine récolteuse agricole automotrice, notamment ramasseuse-hâcheuse, comportant un équipement avant (1) ayant une première largeur de travail (B1) pour récolter du maïs sur pied ou produits de récolte sur pied, analogues, ou un équipement (14) ayant une seconde largeur de travail (B2) pour reprendre des produits agricoles déposés sur le champ ou le pré, tels que de l'herbe coupée ou du fourrage vert, comportant une installation de traitement (5) pour réduire et/ou préparer le produit et d'une installation d'éjection (10) en aval, composée principalement d'un col d'éjection (11) pour reprendre les produits à un point de transfert (12) à partir de l'installation de traitement (5) et transférer les produits à un point d'éjection (13) dans un véhicule de transport (9),
entre le point de transfert (12) et le point d'éjection (13), lorsque l'équipement (1) fonctionne avec la première largeur de travail (B1), on a une première distance (L1) et lorsqu'on utilise l'équipement (14) avec la seconde largeur de travail (B2) on a une seconde distance (L2),
ainsi qu'un moteur (15) équipé d'un groupe d'entraînement dont la vitesse de rotation de fonctionnement se règle par un dispositif de commande réglant le régime du moteur sur le ralenti ou un régime nominal et un régime réduit par rapport au régime nominal,
**caractérisée en ce que**
le moteur d'entraînement (15) fonctionne dans la plage de travail avec l'équipement (1) ayant la première largeur de travail (B1) dans la plage du régime nominal et dans le mode de travail utilisant l'équipement (14) ayant la seconde largeur de travail (B2), dans une plage de régime réduite par rapport au régime nominal,
la première largeur de travail (B1) étant supérieure à la seconde largeur de travail (B2) et la première distance (L1) étant plus grande que la seconde distance (L2).

2. Machine agricole de récolte, automotrice selon la revendication 1,
**caractérisée en ce que**
le moteur d'entraînement (15) fonctionne dans une plage de vitesse de rotation réduite par rapport au régime nominal pour le mode de travail utilisant l'équipement (14) ayant la seconde largeur de travail (B2),
la réduction du régime du moteur d'entraînement (15) correspondant au moins sensiblement au rapport des distances L2/L1.

3. Machine agricole de récolte, automotrice selon la revendication 2,
**caractérisée en ce que**
le dispositif de commande comporte des moyens de détection pour prédéfinir le régime de fonctionnement, ces moyens détectant l'importance de la distance (L1 ou L2) entre le point de transfert (12) et le point de sortie (13) du coude d'éjection (11).

4. Machine agricole de récolte, automotrice selon la revendication 3,
**caractérisée en ce que**
la consigne du régime réduit par rapport au régime nominal est commandée de force par le dispositif de commande à l'aide des distances obtenues (L1 ou L2) par les moyens de détection.

5. Machine agricole de récolte, automotrice selon la revendication 1,
**caractérisée en ce que**
pour prédéfinir le régime de fonctionnement le dispositif de commande se compose d'un dispositif de commutation comportant des positions de commutation pour régler le régime sur le ralenti ou le régime nominal ou au moins sur une position intermédiaire pour le régime réduit par rapport au régime nominal.

6. Machine agricole de récolte, automotrice selon l'une des revendications 1 à 5,
**caractérisée en ce que**
la plage du régime réduit du moteur (15) se situe de préférence entre environ 85 % jusqu'à 75 % du régime nominal.
